# EUROPEAN PATENT APPLICATION

(11) **EP 4 847 821 A1**
(43) Date of publication of application: **02.12.2026**
(21) Application number: 26181306.7
(22) Date of filing: 27.05.2026
(51) Int. Cl.: F16L 37/084, F02M 37/00, F02M 55/00, F02M 69/46, F16L 37/098, F16L 33/30, F16L 37/088, F16L 37/091

(54) **CONNECTOR AND METHOD FOR CONNECTING A FLUID TUBE TO A CONNECTION PORT**

(30) Priority: 27.05.2025 IT 202500012187
(71) Applicant: Reflexallen S.p.A., 41052 Guiglia (MO) (IT)
(72) Inventor: VASCO, LUIGI, ENNA (IT)
(74) Representative: Conti, Marco

(57) **Abstract**

A connector (1) for connecting a fluid tube to a coupling port comprises: an inner body (2) extending along a longitudinal axis (LA) between a first end (2A) and a second end (2B); an outer body (3A) configured to be irreversibly connected to the inner body; a ring (3B) configured to be coupled to the outer body and to be reversibly connected to the connection port.

## Description

The present invention relates to a connector and to a method for connecting a fluid tube to a connection port.

In many industries, it is necessary to connect a first fluid transport line to a second fluid transport line, e.g., in the automotive industry, in which fluids, such as fuels, must be transported between a first point, in which there is fluid tube, and a second point, in which there is a port of the vehicle. These two points are often relatively distant from each other; therefore, it is necessary to install a connection between these two points to transport the fluid from the first point to the other in a simple and efficient manner. To this end, connection joints (connectors) are provided which, if correctly installed, transport the fluid without leakage between two fluid lines. In particular, the connector provides a geometrically congruent interface and a joint that is easily connectable and disconnectable both during the step of assembly and during maintenance operations, also for a high number of cycles.

In particular, quick connectors that are installed between two fluid lines have been developed. In particular, these connectors have a part connected to the first line and another part connected to the second line. At least one of the fluid lines may be easily connected by simply inserting the line into the quick connector. For this purpose, the first fluid line (which may include a tube) may be connected to a side of a quick connector, and the second fluid line may be connected to the quick connector by means of a connection opening. Furthermore, the quick connectors provide a locking arrangement that retains the fluid line and a release mechanism for releasing the fluid line. The quick connectors must be robust, easy to use and leak-tight.

In a known configuration of quick connectors, the body consists of two or more independent parts. Furthermore, the body parts have end portions arranged to allow the engagement and mutual fastening of the first and the second part. The end portions have mutual retaining means, such as clip fastening means operating in an axial engagement direction. Usually, the first and the second part of the body are connected and disconnected with respect to each other in axial manner and; therefore, of all the forces that externally act (e.g., the fluid under pressure) on the coupling (between the two parts of the body), those with an axial component are of greater importance, because they act on components of the connector which are weaker against such forces, and may compromise the stiffness and the reliability of the connector. One of the limitations of these connectors is that the connection strength between the two parts of the body is relatively weak against the axial forces acting on the coupling. In particular, these connectors comprise a body defining an internal channel and formed by two body parts, each having means for connecting a connection (coupling) port to a tube. The connection means may be of various types, e.g., comprising a male tubular portion for engagement inside the tube, a female tubular portion for quick coupling of the tube to the connection port, an element radially movable with respect to the body. The connection means may also include two male portions or two female portions.

In this context, patent document EP2759757B1 provides a quick connector provided with two connectable coupling portions, which, in the mounted state, are inserted one into the other, and in this state may be coaxially locked to each other in a releasable manner by means of a locking device. The quick connector of this solution further comprises a retaining element, provided with collars, which couple to respective retaining rings of the two coupling portions. In particular, the collars form an elastically movable retaining portion that engages with the retaining bars of coupling portions. Basically, the retaining element is made as an elastic annular clamp that has an axially and radially continuous slot in a circumferential area as an interruption of a closed annular shape, so that two elastic, arcuate locking arms are formed, each of which has at least one C-shaped retaining section.

It is provided that the collars in the retaining section of the retaining element are designed so that, when the retaining element moves radially from the assembled state outward, one collar, which, in the assembled state, rests on the retaining bar of one of the coupling parts, is released, while the other collar, at least in some areas, still retains the retaining bar of the other coupling part. This quick connector is compact and simple. Other examples of known quick connectors are described in patent documents WO2021/165715A1, EP1941201B1, US6082779A, US6086119A, US2012/0104746, WO2021/084106A1, US2007/0222216A1, US 2019/0063654 A1, US 10220571 B2, EP 1873439 A2, WO 2015/173121A, US1125370B2, US8555480 B2, WO2019/121050A1, US11199281 B2, CN 110043731A, CN210266332U, EP3904746 A1, US 2018/0347739A1 and US 10415733 B2.

However, the known quick connectors have some drawbacks and may be improved. Indeed, in this sector, there is the need to make a quick connector that is particularly efficient and reliable and of low complexity.

It is the object of the present invention to make available a connector and a method for connecting a fluid tube to a coupling port which overcome the drawbacks of the background art mentioned above.

Said object is fully achieved by the connector and the method according to the present invention, which is characterized by the features set out in the appended claims below.

According to an aspect of the present description, the present invention provides a connector for connecting a fluid tube to a coupling port. The connector comprises an inner body. The inner body extends along a longitudinal axis. The inner body extends between a first end and a second end. The inner body includes a tube connection portion. The tube connection portion is configured to be coupled with the fluid tube at the first end.

The inner body includes a port connection portion. The port connection portion is configured to be coupled to the connection port at the second end.

The inner body includes an internal hollow channel. The internal hollow channel extends between the first and second ends to allow the fluid flowing. The connector includes an outer body. The outer body is configured to be connected to the inner body. In particular, the outer body is configured to be irreversibly connected to the inner body.

The connector includes a ring. The ring is configured to be coupled to the outer body. The ring is configured to be connected to the connection port. In particular, the ring is configured to be connected to the connection port in reversible manner.

This solution allows a more robust connector to be obtained, by virtue of the combination of an irreversible fastening between the inner body and the outer body, which ensures safety and mechanical stability, and a reversible fastening between the ring and the connection port, which ensures operational flexibility.

In an example, the ring comprises a rib. The rib preferably includes an elastic material. Preferably, the rib is made of an elastic material, so that it deforms in the radial direction by interacting with the connection (coupling) port to allow reversible engagement and disengagement of the ring with the connection (coupling) port.

The rib, elastically deformable in the radial direction, allows a reversible but stable fastening of the ring to the connection port, thus improving the ease of assembly and disassembly of the connector without the use of tools or additional fastening elements.

In an example, the outer body and the ring are movable with respect to each other. They may assume a coupling configuration, in which they are connected to each other, and a decoupling configuration, in which they are mutually disconnected.

Preferably, the outer body and the ring are configured to be connected in an irreversible or nearly irreversible manner.

In an example, the ring comprises a release button. The release button is preferably elastic. The release button may be movable in a radial direction with respect to the longitudinal axis between an extended position and a retracted position. In this example, the outer body comprises a slot to house the release button located in the extended position. In an example, the outer body and the ring are coupled to each other in a locking position. In the locking position, the retractable release button is inserted in the slot. The ring preferably includes an elastic material. The ring is preferably made of an elastic material. In an example, the outer body and the ring are positioned in the locking position in response to the radial deformation of the ring.

The presence of an elastic and retractable release button integrated in the ring allows a secure and reversible coupling between the ring and the outer body. The possibility of radial movement of the button allows the ring to be locked in position by insertion into a slot of the outer body, thus ensuring a stable fastening. Furthermore, by virtue of the elasticity of the ring, the entire coupling may be made or released by means of a simple controlled radial deformation, without the need for tools.

In an example, the outer body comprises a pair of slots and the ring comprises a pair of retractable release buttons. In this example, the buttons of the pair of retractable release buttons are positioned on an outer surface of the ring. The buttons of the pair of retractable release buttons are radially spaced apart from one another on two opposite sides of the ring. In this example, the ring is radially flexible.

In an example, the release buttons are spaced apart from each other by 180°.

In an example, the ring includes a pair of locking elements. The pair of locking elements is positioned on the outer surface of the ring. The locking elements of the pair of locking elements are radially spaced apart from one another on two opposite sides of the ring. The locking elements are radially spaced apart from the release buttons. The ring includes a pair of housings for receiving the locking elements. In this example, in the locking position, the release buttons are engaged in the slots, and the locking elements are engaged in the respective housings, so as to lock the ring inside the outer body. It should be noted that the ring may comprise more than two locking elements and the outer body includes a respective housing for each locking element.

The presence of a pair of retractable release buttons and a pair of locking elements, radially distributed and separate from each other, allows a solid, secure, and guided coupling between the ring and the outer body, while at the same time ensuring the possibility of a quick and controlled release. The radial elasticity of the ring, combined with a diametrically opposite arrangement (at 180°) of the buttons and the locking elements, improves the mechanical balance and the symmetry of the coupling force, facilitating installation and removal of the ring without tools, and with lower risk of misalignments.

In an example, the ring includes an elliptical ring. In this example, the release buttons are positioned at the two vertices of the elliptical ring. In this example, the elliptical ring is radially flexible. In this example, in the locking position, the release buttons engage in the slots to fasten the vertices of the ring.

In an example, the inner body comprises a plurality of teeth. The teeth are angularly distributed along a perimeter of the inner body about the longitudinal axis. The teeth are spaced apart from one another with respect to the longitudinal axis. The teeth of the plurality of teeth are elastic and movable in a radial direction with respect to the longitudinal axis, so as to bend toward the center of the outer body and toward the longitudinal axis as a result of mechanical coupling between the outer body and the inner body.

The presence of a plurality of elastic teeth angularly distributed along the inner body makes it possible to achieve a secure and guided mechanical coupling between the inner body and the outer body. The possibility for the teeth to radially flex, i.e., toward or away from the longitudinal axis, allows an elastic and adaptive locking during assembly, improving retention and reliability of the assembly.

In an example, each tooth of the plurality of teeth comprises a protruding portion. The protruding portion is preferably arranged at a free end. The protruding portion radially protrudes away from the longitudinal axis and is inclined upwards to be axially inserted in respective corresponding seats of the outer body.

According to an aspect of the present description, the present invention provides a method for connecting a fluid tube to a coupling port. The method comprises a step of coupling a first end of an inner body elongated along a longitudinal axis to the tube. The method comprises a step of coupling a second end of the inner body to the coupling port. The inner body has an internal hollow channel between the first end and the second end to allow the fluid flowing from the fluid tube.

The method comprises a step of irreversibly connecting the inner body to an outer body. The method comprises a step of coupling a ring to the outer body. The method comprises a step of releasably coupling the ring to the connection port.

In an example, the ring comprises a rib. The rib is preferably made of an elastic material, so that it deforms in radial direction interacting with the coupling port to allow the reversible engagement and disengagement of the ring with the connection port.

In an example, the coupling between the outer body and the ring is obtained by means of a coupling between an elastic release button, movable in a radial direction with respect to the longitudinal axis between an extended position and a retracted position, and a slot to house the locking button located in the extended position. In an example, the release button is present in the ring and the slot is present in the outer body.

In an example, the ring and the outer body are coupled to each other in a locking position. In the locking position, the retractable locking button is inserted in the slots. Preferably, the ring is made of an elastic material. In an example, the ring and the outer body are brought into locking position through radial deformation of the ring.

In an example, the inner body comprises a plurality of teeth angularly distributed along a perimeter of the inner body around the longitudinal axis and spaced apart from one another with respect to the longitudinal axis. In this example, the teeth of the plurality of teeth are elastic and movable in a radial direction with respect to the longitudinal axis, so as to bend toward the center of the outer body and toward the longitudinal axis as a result of the mechanical coupling between the outer body and the inner body. Preferably, each tooth of the plurality of teeth comprises a protruding portion at a free end. The protruding portion radially protrudes away from the longitudinal axis and is inclined upwards to be axially inserted in respective corresponding seats of the outer body.

This and other features will be more clearly highlighted by the following description of a preferred embodiment, illustrated
by way of non-limiting example in the appended drawings, in which:

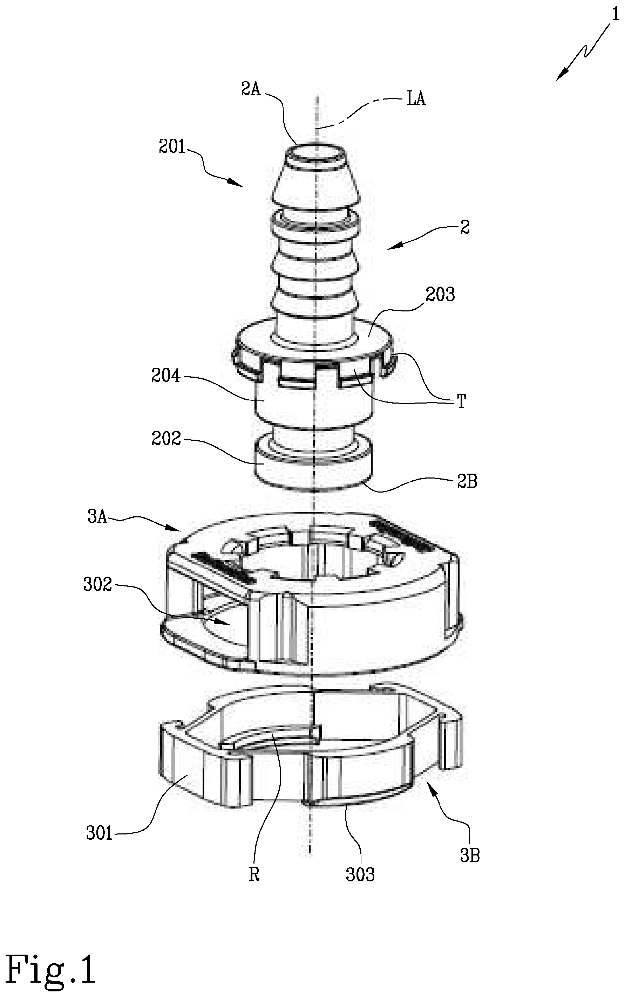

- figure 1 shows a connector according to one or more aspects of the present description;

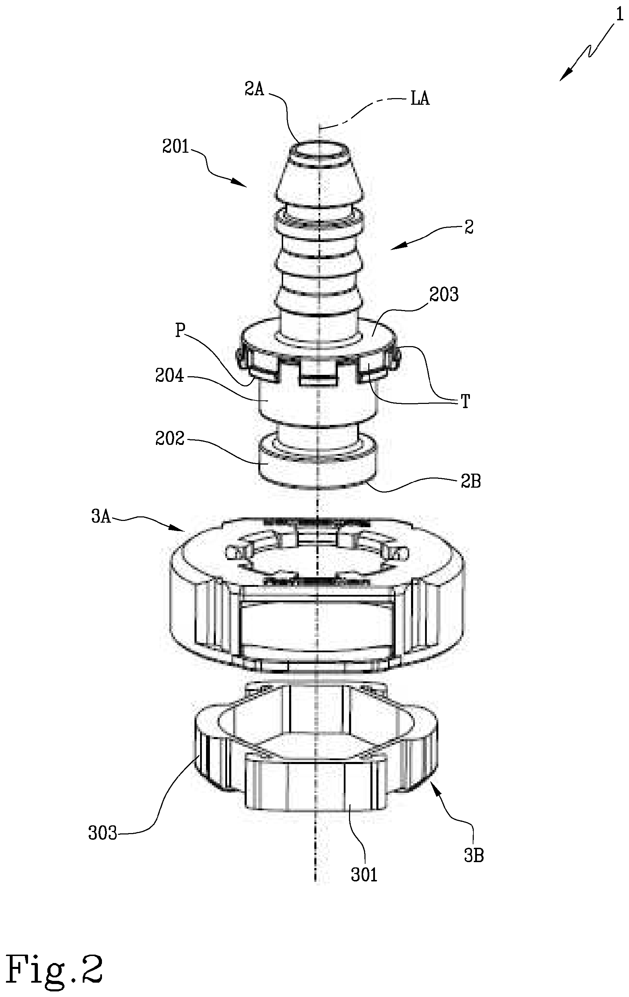

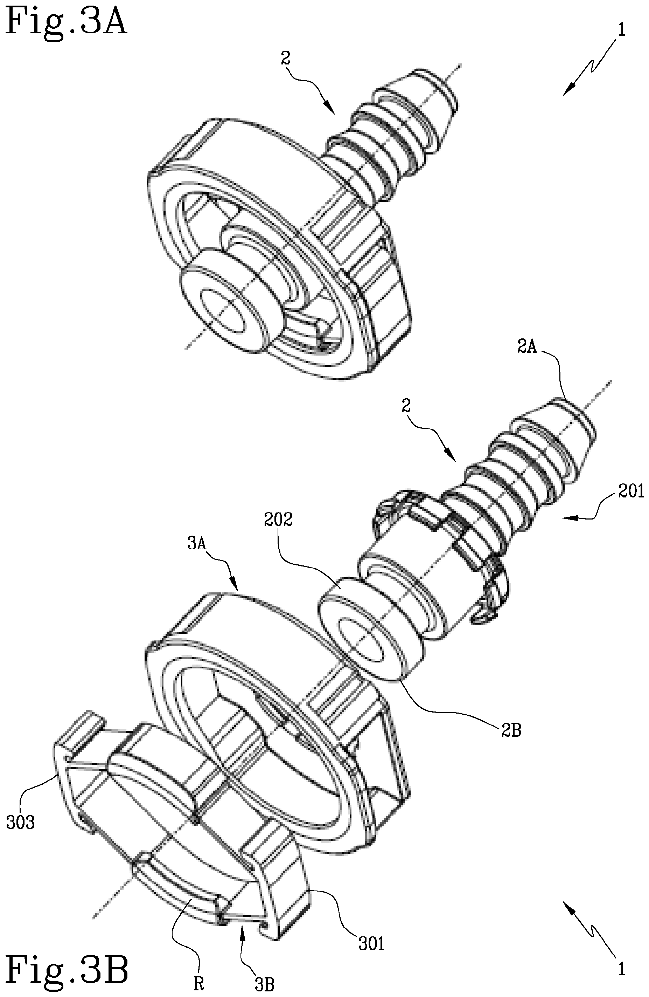

- figures 2, 3A, and 3B show a view of the connector from a different angle than that shown in figure 1

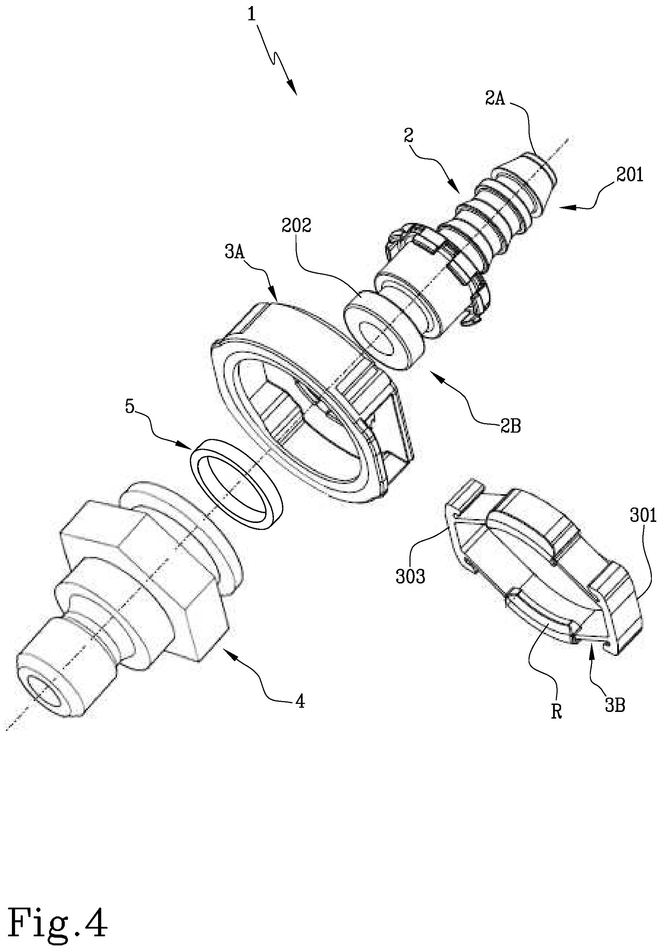

- figure 4 shows the connector of claim 1, in exploded view, with the safety ring;

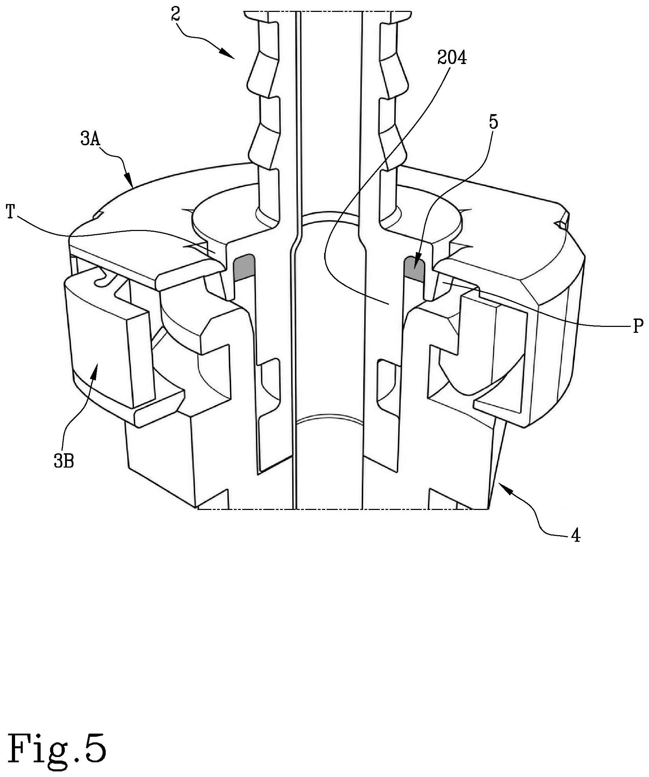

- figure 5 shows portion of the connector of claim 1, in partially open view. With reference to the accompanying figures, reference numeral 1 indicates a connector for connecting a fluid tube to a connection (coupling) port 4.

The connector 1 comprises an inner body 2 extending along a longitudinal axis LA between a first end 2A and a second end 2B. The inner body comprises a tube connection portion 201 that is connectable to the fluid tube at the first end 2A. The tube connection portion is preferably a fir-tree-shaped tube. The outer surface of the tube connection portion preferably has a plurality of grooves. The inner body 2 includes a connection portion 202, to be coupled to the coupling port 4 at the second end 2B.

In particular, the inner body 2 includes an internal hollow channel HC. The internal hollow channel extends between the first and second ends to allow a fluid flowing through it. The internal hollow channel extends along the inside of the inner body 2. The connector 1 includes an outer body 3A. The outer body 3A connects to the inner body 2A. In particular, the outer body and the outer body are coupled to each other in an irreversible manner. In a preferred example, the inner body comprises a plurality of teeth T, angularly distributed along a perimeter of the inner body around the longitudinal axis LA, and spaced apart from one another with respect to the longitudinal axis LA. The teeth T are preferably placed around a perimeter of a disc 203 connected to the inner body between the first end and the second end. The disc or flange is preferably integral to the inner body 2. The inner body 2 includes a core 202. The disc 203 protrudes radially outward with respect to the core 202. This disc horizontally extends around the inner body, preferably in an intermediate part of the body between the first end and the second end. The teeth T of the plurality of teeth are elastically movable in a radial direction with respect to the longitudinal axis LA, so as to bend toward the longitudinal axis as a result of mechanical coupling between the inner body and the outer body. The teeth T are radially spaced with respect to the core 202, away with respect to the longitudinal axis.

In an example, the connector comprises a safety ring 5. Operatively, the safety ring 5 is positioned coaxially to the longitudinal axis. The safety ring 5 is configured to be fitted between the teeth T and the core 204. The safety ring 5 is fitted between the teeth T and the core 204 the inner body 2 after the inner body 2 has been coupled to the outer body 3A; preferably the safety ring 5 is translated along the longitudinal axis, towards the first end 201, while keeping the safety ring 5 coaxial to the longitudinal axis.

The safety ring 5 has the function of improving the robustness and reliability of the connector, because it avoids that the teeth T may bend inward undesirably, when the connector is coupled; such accidental bents may cause undesired uncoupling of the inner portion with respect to the port, or a damage of the teeth T.

Preferably, the safety ring has, at one of its sides, rounded, rounded or chamfered edges. This allows a better fit in a groove formed by the teeth and the core.

In one example, each tooth of the plurality of teeth extends parallel to the longitudinal axis for a first length, wherein the core of the inner body extends parallel to the longitudinal axis for a first length, larger than the first length.

In an intermediate position between the first and the second end, the body has a transverse cylindrical portion surrounding the body itself.

On the upper part of that cylindrical portion, said disc is arranged horizontally and radially extending outward with respect to the longitudinal axis of the body.

On the lower face of the disc, facing toward the second end, there is the plurality of teeth arranged at intervals along the peripheral edge of the disc.

The teeth vertically extend downwards and are configured so as to be flexible. When the teeth are inserted into the respective housings of the outer body, they initially flex towards the inside (i.e., towards the longitudinal axis), and then return towards the outside once past the inlet of the housings. In this position, the teeth interlock irreversibly, locking the connector inside the outer body.

Each tooth of the plurality of teeth comprises a protruding portion P at a free end thereof. Each tooth comprises a protruding portion P radially oriented outwards and upwards. Preferably, for each protruding portion P, the face facing inward towards the longitudinal axis is slanted so that the radial thickness of the protruding portion decreases axially towards the second end 2B of the inner body. The protruding portion of each tooth thus fits into the complementary seat of the outer body, mechanically and irreversibly locking the connector inside the outer body. The outer body is preferably circular or nearly circular. The outer body has one or a plurality of slots 302. The connector includes a ring 3B. The ring is reversibly coupled to the connection (coupling) port 4, and in particular to a flange portion of the connection port. The ring is radially flexible. The outer body and the ring are irreversibly coupled.

The outer body preferably includes an elastic material and is preferably made of flexible material. The term "flexible" means a material that is capable of elastically deforming with a load (typically, a mechanical load), and returning to the original shape once the stress is removed.

As explained above, the outer body has two through slots arranged at two radially opposite points of the body, preferably located at the vertices of an oval or elliptical cross-section of the body itself. The ring has a substantially elliptical or circular shape and has two elastic buttons arranged on the outer surface of the ring, radially spaced, preferably by about 180°, at the vertices of its geometry. The buttons are configured to radially move (with respect to the longitudinal axis of the outer body) between a retracted position (inside the ring) and an extended position (radially protruding outwards).

The ring is inserted into the outer body by means of a controlled elastic deformation of the ring itself, exploiting its radial flexibility and the configuration of the elastic buttons.

Furthermore, the ring may include locking elements 303, including protrusions positioned on its outer surface, radially spaced apart with respect to the buttons, preferably of about 90°. These protrusions fit into complementary housings 304 formed on the inner surface of the outer body, contributing to stabilizing the ring in its mounted position.

The ring has on its inner face (facing the longitudinal axis) one or more ribs R, preferably two, made of flexible material. These ribs are preferably aligned with the locking elements that are present on the outer face of the ring.

During the insertion of the connection port into the ring, the flanged portion present on the port contacts the internal ribs of the ring, and the ribs elastically deform to allow the passage of the flange. Once the flange has passed beyond the ribs, the latter return to their original shape, reversibly locking the port inside the ring.

### Insertion procedure:

The operator applies a pressure on the ring sides (i.e., on the wider regions of its elliptical section), bringing them closer to one another in a radial direction toward the longitudinal axis. This causes a deformation of the ring, making it temporarily narrower at the sides and facilitating its insertion into the outer body. One of the elastic buttons, positioned on a vertex of the ring, is aligned with the first slot of the outer body. During the insertion, the button elastically retracts (i.e., it compresses towards the inside of the ring) to pass beyond the edge of the slot. Once passed, the button automatically expands, continuing to push the ring inside the outer body (the ring slides inside the outer body). During this step, the ring is still radially deformed, maintaining the sides compressed. As the ring is inserted further in, the first button is inserted inside the respective slot (radially placed opposite the second slot) and the other button is inserted inside the first slot, and the locking elements are inserted inside the housings. Once the two buttons are inserted in the respective slots, the ring expands and by virtue of the elasticity of the material, the ring returns to its original shape and perfectly adapts to the internal geometry of the outer body.

To remove the port, the buttons are pressed towards the inside (i.e., towards the center of the longitudinal axis). This action induces a deformation of the ring, in particular, in the portions where the ribs are present. The sides of the ring radially expand outwards, releasing the port flange and allowing the extraction of the connector. In particular, the buttons are movable between a retaining position and a releasing position. In the retaining position, the buttons are inserted in the respective slots and at least partially contact an inner face of the outer body. Preferably, in the retaining position, the buttons protrude from the slots, and the sides of the buttons contact the inner face of the outer body. The buttons are configured to slide inside the outer body in a sliding manner so as to move into the release position, where the buttons move towards the inside of the outer body (the center of the ring) and the sides of the ring expand to release the connection port.

Operatively, in an example, to connect the tube to the connection port, first, the ring 3B is connected to the outer body, then, the inner body is fixed to the outer body, the flange portion F of the connection port is connected to the ring and the tube is connected to the inner body.

## Claims

1. A connector (1) for connecting a fluid tube to a coupling port (4), comprising:
- an inner body (2) extending along a longitudinal axis (LA) between a first end (2A) and a second end (2B), the inner body including:
a tube connection portion (201), configured to couple with the fluid tube at the first end (2A);
a port connection portion (202), configured to be coupled to the connection port at the second end (2B);
an internal hollow channel extending between the first and second ends to allow fluid flowing;
- an outer body (3A) configured to be irreversibly connected to the inner body;
- a ring (3B) configured to be coupled to the outer body and to be reversibly connected to the connecting port.

2. The connector according to claim 1, wherein the ring comprises a rib (R) comprising an elastic material, such that it deforms in radial direction to interact with the connecting port to allow reversible engagement and disengagement of the ring with the connecting port.

3. The connector according to claim 2, wherein the ring comprises an elastic release button (301) movable in a radial direction with respect to the longitudinal axis between an extended position and a retracted position, and the outer body comprises a slot (302) to house the release button located in the extended position.

4. The connector according to claim 3, wherein the outer body (3A) and the ring (3B) are coupled to each other in a locking position, wherein the retractable release button is inserted in the slot, wherein the ring is made in elastic material and wherein the outer body and the ring are brought into the locking position in response to a radial deformation of the ring.

5. The connector according to claim 3 or 4, wherein the outer body comprises a pair of slots and the ring comprises a pair of retractable release buttons, wherein the buttons of the pair of retractable release buttons are positioned on an outer surface of the ring and are radially spaced from each other on two opposite sides of the ring, wherein the ring is radially flexible, and wherein the release buttons are spaced from each other by 180°.

6. The connector according to claim 5, wherein the outer body includes a pair of locking elements (303) on the outer surface of the ring, wherein the locking elements are radially spaced from one another on two opposite sides of the ring, wherein the locking elements are radially spaced from the release buttons, wherein the ring includes a pair of housings (304) to receive the locking elements, wherein, in the locking position, the release buttons engage with the slots and the locking elements engage with the respective housings, thus locking the ring inside the outer body.

7. The connector according to any one of claims 5 to 6, wherein the ring includes an elliptical ring and wherein the release buttons are positioned at the two vertices of the elliptical ring, and wherein the elliptical ring is radially flexible.

8. The connector according to any one of the preceding claims, wherein the inner body comprises a plurality of teeth (T), angularly distributed along a perimeter of the inner body around the longitudinal axis (LA) and spaced from one another around the longitudinal axis (LA), the teeth (T) of the plurality of teeth being elastic and movable in radial direction with respect to the longitudinal axis (LA), so as to bend toward the center of the outer body and toward the longitudinal axis as a result of mechanical coupling between the outer body and the inner body.

9. The connector (1) according to claim 8, wherein each tooth of the plurality of teeth (T) comprises a protruding portion (P) at a free end, the protruding portion radially projecting away from the longitudinal axis and it is upwardly inclined to be axially inserted into respective corresponding seats of the outer body (3A).

10. The connector according to claim 8 or 9, wherein the inner body (2) includes a core (204), the teeth (T) surrounding the core (204) and being radially spaced thereto, the connector further comprising a safety ring (5), configured to be fitted between the teeth (T) and the core (204), with the inner body (2) is coupled to the outer body (3A).

11. A method for connecting a fluid tube to a coupling port, comprising the following steps:
- coupling a first end (2A) of an inner body (2) elongated along a longitudinal axis (LA) to the tube and a second end (2B) of the inner body to the coupling port, the inner body having an internal hollow channel between the first and the second end to allow fluid flowing from the fluid tube;
- irreversibly connecting the inner body to an outer body (3A);
- coupling a ring (3B) to the outer body (3A);
- releasably coupling the ring to the connection port.

12. The method according to claim 11, wherein the ring comprises a rib (R) comprising an elastic material, so that it radially deforms to interact with the coupling port to allow reversible engagement and disengagement of the ring with the connection port, , wherein the coupling between the outer body and the ring is achieved by coupling an elastic release button (301) movable in a radial direction with respect to the longitudinal axis, between an extended and a retracted position, with a slot (302) to house the locking button located in extended position, wherein the release button is present in the ring and the slot is present in the outer body.

13. The method according to claim 12, wherein the ring and the outer body are coupled to each other in a locking position, wherein the retractable locking button is inserted in the slots, wherein the ring is made of elastic material and wherein the ring and the outer body are brought into the locking position through radial deformation of the ring.

14. The method according to any of the claims from 11 to 13, wherein the inner (2) body comprises a plurality of teeth (T), angularly distributed along a perimeter of the inner body around the longitudinal axis (LA) and spaced from one another around the longitudinal axis (LA), the teeth (T) of the plurality of teeth being elastic and movable in a radial direction with respect to the longitudinal axis (LA), so as to bend toward the center of the outer body and toward the longitudinal axis as a result of mechanical coupling between the outer body (3A) and the inner body (2), wherein each tooth of the plurality of teeth (T) comprises a protruding portion (P) at a free end, the protruding portion radially projects away from the longitudinal axis and is upwardly inclined to be axially inserted into respective corresponding seats of the outer body.

15. The method of claim 14, further comprising a step of fitting a safety ring (5) between the teeth (T) of the inner body (2) and a core (204) of the inner body, after the inner body (2) has been coupled to the outer body (3A).
